# EUROPEAN PATENT SPECIFICATION

(11) **EP 0 911 590 B1**
(45) Date of publication and mention of the grant of the patent: **07.06.2006**
(21) Application number: 98119625.6
(22) Date of filing: 16.10.1998
(51) Int. Cl.: F24H 9/14

(54) **Valve unit with built-in hydraulic distribution system, particularly for wall-mounted boilers for heating and producing sanitary hot water**
Ventileinheit mit integriertem hydraulischem Verteilsystem, insbesondere für kombinierten Wandkessel
Unité de soupape avec système de distribution hydraulique integré, en particulier pour chaudières murales mixtes

(30) Priority: 20.10.1997 IT VR970095
(43) Date of publication of application: 28.04.1999
(60) Divisional application: 05024530.7
(73) Proprietor: FARO S.r.l., 37068 Vigasio VR (IT)
(72) Inventor: Falavegna, Valter, 37068 Vigasio (Verona) (IT); Falavegna, Avito, 37068 Vigasio (Verona) (IT); Rossignoli, Michele, 37068 Vigasio (Verona) (IT)
(74) Representative: Reniero, Cirillo Silvano

(56) References cited:
- EP-A- 0 693 658
- EP-A- 0 797 057
- DE-A- 3 109 918
- GB-A- 2 092 226
- US-A- 6 129 523

## Description

The present invention relates to a valve unit with built-in hydraulic distribution system, particularly suitable for wall-mounted boilers for heating and producing hot water.

The design of wall-mounted instant boilers must meet the requirement of minimizing the overall dimensions at increasingly competitive costs.

Besides, it is not possible to adopt separate commercially available components and then connect them by means of pipes or other methods, which in addition to requiring considerable space for their placement would require considerable time, and accordingly high costs, for their connection. Therefore, it is convenient to concentrate all the functions related to the hydraulic distribution and control of the boiler in a single compact unit so as to drastically reduce the overall dimensions and use plastic materials in order to reduce costs.

Valve units with a built-in hydraulic distribution system made of plastics have already been proposed which are mounted on a supporting plate and are provided with brass couplings; however, they have proved to be less than satisfactory since the couplings must be locked onto the supporting plate with mechanical means and this leads to considerable rigidity in the connection between the brass couplings and the plastic components. As a consequence of the axial misalignment stresses generated during the coupling of the unit to a heating system and to a sanitary water distribution system, and due to the inevitable thermal expansions, said tensioned couplings are subjected to stresses which in the course of time lead to the breakage of the plastic components.

EP-0 797 057 discloses a valve assembly delivering both heating and sanitary hot water, consisting of two sub-assemblies or valve units directly attached to connecting nipples on a support plate.

DE-31 09 918 discloses a valve unit with a built-in hydraulic distribution comprising a pump-breather unit which is located above the pump body. No disclosure is provided as to particular features of connecting nipples.

US-4 126 557 discloses a totally enclosed fuel oil filter housing having a fuel inlet nipple and a fuel outlet nipple directly attached thereto on a mounting bracket.

The aim of the present invention is to provide a valve unit of the above-described type for a wall-mounted boiler with gas burner, capable of eliminating the above-described drawbacks, particularly as regards the possibility that its metal and couplings might keep under tension the plastic portions in which they are partially included.

Within the scope of this aim, an object of the present invention is to provide a valve unit for a boiler which is structured so it can be connected to pipes for connection to a primary exchanger (gas-water), to an expansion vessel, to a safety valve, to a drain cock and to a water gauge without the aid of tools.

Another object of the present invention is to provide a high-efficiency degasser-air separator included in the body or casing of a pump particularly for use in systems for heating and distributing sanitary water.

Another object of the present invention is to provide a valve unit which is very quiet during use because it can effectively eliminate cavitation in the water circulating theretrough.

Another object of the present invention is to provide a valve unit which is highly efficent and durable and can be manufactured at highly competitive costs.

This aim, these objects and others which will become apparent hereinafter are achieved by a valve unit with built-in hydraulic distribution, particularly suitable for wall-mounted boilers for heating and producing sanitary hot water, including: a three-way valve unit which can be connected to a water supply mains to a user of a secondary sanitary hot water circuit, and to an outlet of a primary circuit for water heated by a main heat exchanger; a pump breather unit which can be connected to an inlet and to an outlet of a set of radiators of a heating system, and to an inlet of said primary circuit; and a water-water heat exchanger which is connected in parallel to said units to receive in countercurrent hot water from said primary circuit and cold water from said secondary circuit starting from said valve unit to supply sanitary hot water to said user; a base plate made of a rigid material arranged to support said valve unit and said pump-breather unit on a same side thereof, a plurality of metal connecting nipples each having a threaded tip portion extending through, and protruding from, the other side of said base plate and characterised in that it comprises screw means for securing said valve and pump breather units to said base plate, and a nipple portion whose perimeter is polygonal in shape, fitted into a respective seat formed in a portion of the valve and pump breather units (1,2) contacting a gasket means (5a), thereby delimiting an interspace between said seat in said portion of the valve and pump breather units (1,2) contacting a gasket means (5a) and said base plate, said interspace having a height that is slightly greater than said polygonally shaped portion of the nipples (ES).

Further characteristics and advantages of the present invention will become apparent from the detailed description of some currently preferred embodiments thereof, given with reference to the accompanying drawings, wherein:
Figure 1 is a front elevation view of the valve unit;
Figure 2 is a plan view of the valve unit of Figure 1;
Figure 3 is a side view of the valve unit of the Figure 1;
Figure 4 is a front view, with some parts shown in cross-action, of the scroll of the pump which is part of the valve unit according to the invention;
Figure 5 is a sectional view, taken along the plane A-A of Figure 1, of an air separator and of an air vent valve which is monolithic with the scroll of the pump and;
Figure 6 is a plan view of the air vent valve of Figure 5;
Figure 7 is a front view, similar to Figure 4 but related to another embodiment of a pump scroll;
Figure 8 is a top view, with parts shown in cross-section, of the pump scroll of Figure 7;
Figures 9 and 10 are, respectively, a side view and a rear view of the pump scroll of Figure 7; and
Figure 11 is a chart.

In the accompanying drawings, identical or similar parts or components are designated by the same reference numerals.

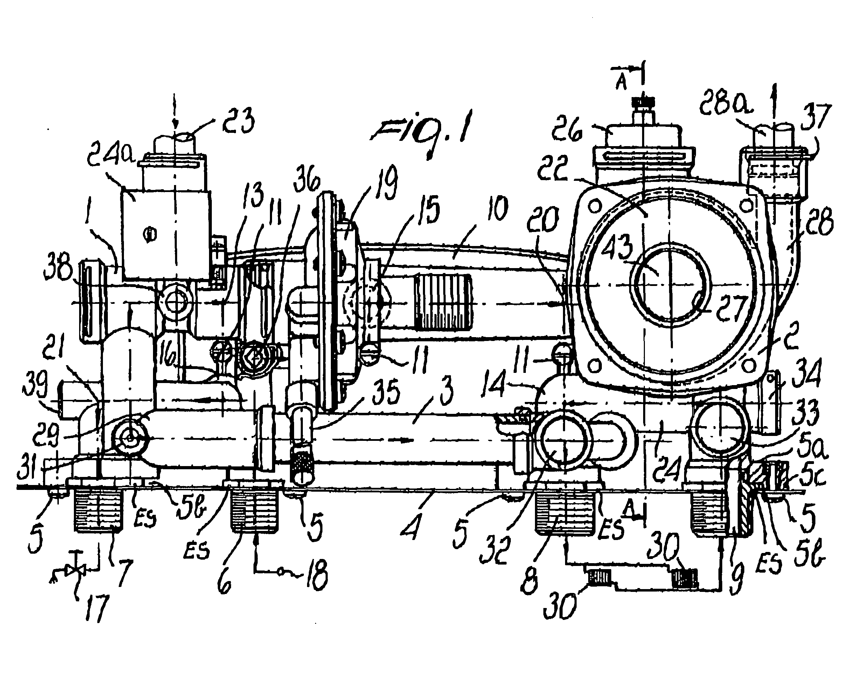

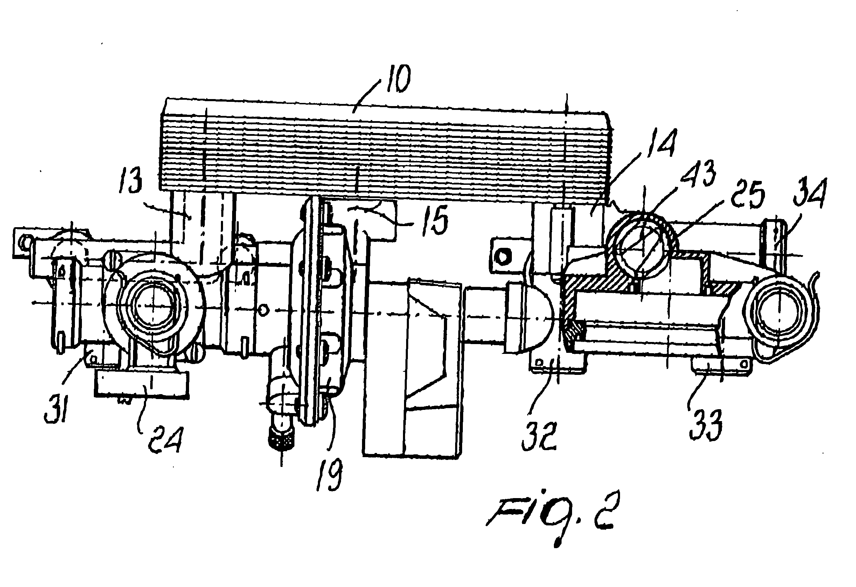

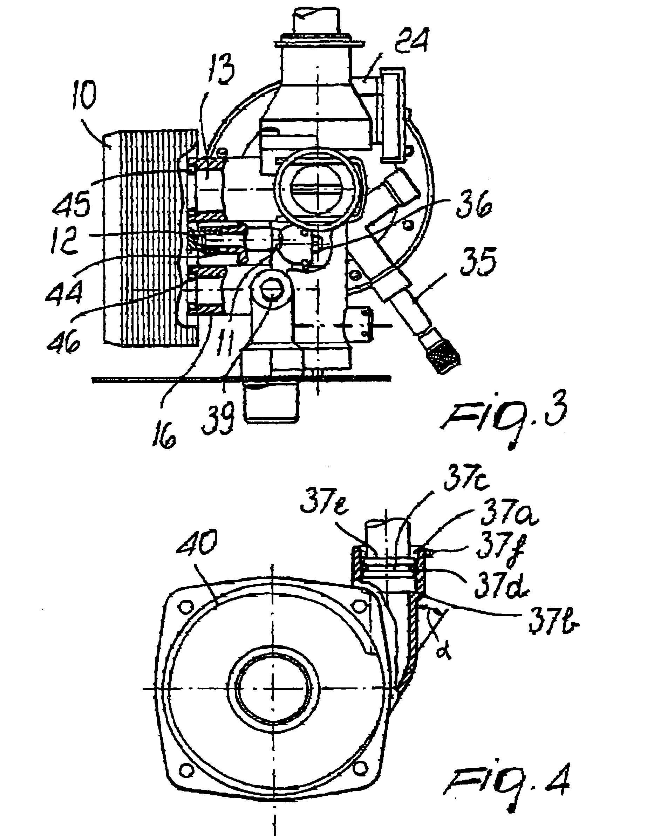

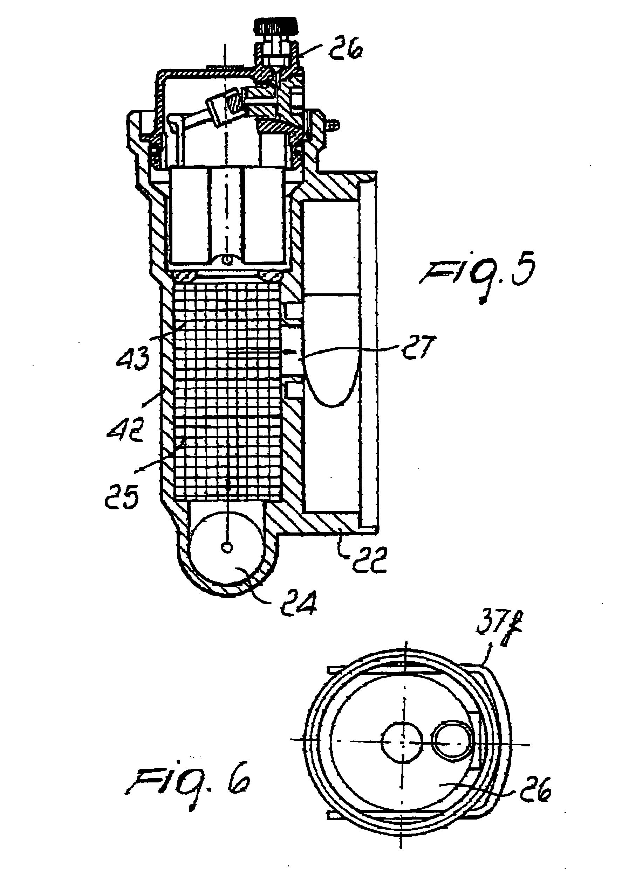

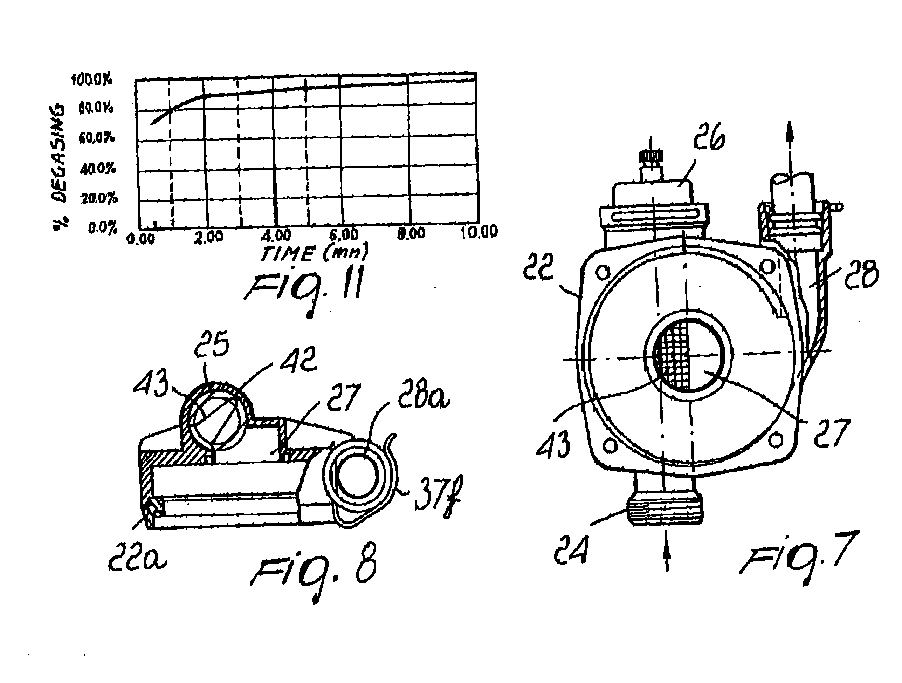

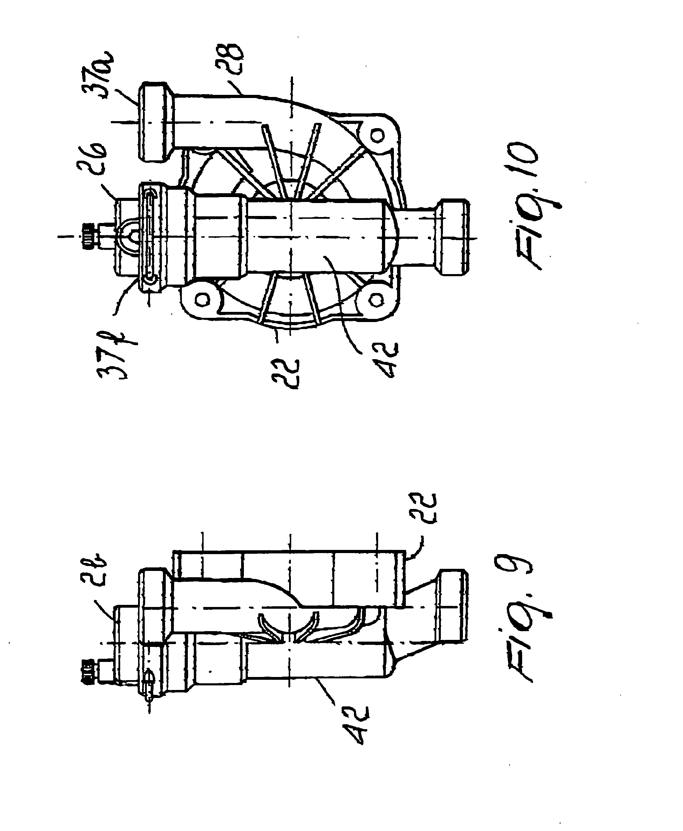

Initially with reference to Figures 1 and 2, it can be noticed that a valve unit according to the present invention is formed by two main units 1 and 2 which are mutually connected by a plastic duct 3 and are supported together by a metal base plate 4 to which they are anchored by means of four screws 5.

The units 1 and 2 are arranged on a same side with respect to the base plate 4 and protrude through it with four metal connecting nipples: a sanitary water inlet nipple 6, a sanitary hot water outlet nipple 7, a nipple 8 for feeding the radiators 30 of a heating system, and a nipple 9 for the return from the radiators 30. It should be noted that the nipples or connectors 6 and 7 for the sanitary water distribution system are both directly connected to the unit 1, while the nipples or connectors 8 and 9 for the heating system are directly connected to the unit 2. The threaded tip portion of the nipples 6 to 9 protrudes on the other side of the plate 4, while the portion of said nipples that has a hexagonal perimeter is inserted in a respective seat which is also hexagonal or has at least one pair of diametrically opposite raised portions to ensure mating between the hexagonal part of each nipple and the plate, so that the nipples are anchored without being able to rotate.

Each nipple 6 to 9 is anchored so as to be slightly articulated, about a respective o-ring gasket 5a, both with respect to the plastic material of the respective unit 1 or 2 that includes it and with respect to the base plate 4. For this purpose, the hexagonal part ES of each nipple is thinner than the interspace 5b delimited between the plate and the body of the units 1 and 2 at each hole for accommodating the screws 5.

More particularly, each hole for accommodating the fixing screws 5 is formed in an enlarged heel-shaped portion 5c made of plastics, which delimits, next to it, the interspace 5b as described above. The gap of said interspace is such as to allow a slight play, for example on the order of a few tenths of a millimeter, so as to allow the nipple that is accommodated therein with its hexagonal portion to perform, if necessary, an intended limited articulated movement.

This is done in order to allow the respective nipple to adapt, within certain limits, to a coupling pipe, so as to avoid subjecting the plastic portions in contact with the nipple to tension.

As mentioned, in order to avoid tensioning the plastic material of which the units 1 and 2 are made, the anchoring of the nipples 6 to 9 to the base plate 4, while allowing the presence of a sealing ring of the o-ring type in the plastic material, prevents the tensioning of the plastic material, since any torsional stresses applied to the nipples are absorbed by the hexagonal seat of the respective nipple, which is obtained by pressing in the plate.

A similar situation occurs for the connections for anchoring the units 1 and 2 to the exchanger 10, which are also not subjected to tensions, since when the tension elements 11 are tightened the pins 12 rest within the respective internal seats 44.

Moreover, the system for forming a seal on the molded collars 45 and 46 of the exchanger 10 provides for a seal by means of O-ring gaskets, but does so radially on the respective collar instead of by compression against the base, so as to avoid tensions in the plastic material and deformations of the metal plate.

A water-water exchanger 10 of any suitable type, for example of the plate type, is anchored to the two units 1 and 2 in a bridge-like configuration by means of three tension elements 11 which pass through a respective hole provided in one of the units and screw onto a respective pin 12 (Figure 3) which is welded or otherwise fixed to the exchanger 10 and rests against a respective internal seat 44 in the tip portion of the hole for accommodating the tension element.

The units 1 and 2 are connected to the exchanger 10, so as to allow the flow of a fluid, by means of respective ducts or channels: a primary inlet duct 13 (Figure 3), a primary outlet duct 14, a sanitary water inlet duct 15, and a sanitary water outlet duct 16; said ducts are provided with a sealing tip gasket of the radial O-ring type 45 and engage, for example, collars molded on the exchanger 10.

The unit 1, by means of its nipple 7, can be connected to a cock 17 for delivering sanitary hot water and can be connected to a water delivery mains by means of the nipple 6. The nipple 6 is one of the inlet ways of a three-way valve 19, for example of the type illustrated and disclosed in IT-A-1 202 009 of July 11, 1985.

When the cock 17 is opened, the valve 19 performs a hydroelectric switching, changing its configuration and opening at the nipple 6, so that the water that arrives from the mains 18 can enter said valve, pass through it, reach the inlet 15 of the exchanger 10 and, continuing along a duct 20, pass through the exchanger, exit at the outlet 16 and then finally reach the duct 21 and the nipple 7.

Due to the hydraulic switching that has occurred in the valve 19, primary hot water, circulated by a pump generally designated by the reference numeral 22 and arranged in the unit 2 and heated by a primary exchanger (not shown in the drawings), for example a gas burner of any suitable type, is fed to an inlet connector 23 which is controlled by a flow control valve 24a, for example of the type disclosed in IT-A-1 257 410 of March 18, 1992.

From the inlet 23, the water flows into the duct 13, reaches the exchanger 10 and passes through it in countercurrent with respect to the secondary stream of the sanitary circuit, so as to transfer heat thereto and ensure instant and continuous production of sanitary hot water. As it continues along its path, the primary water exits from the exchanger 10, passing through the connector 14 and a manifold 24, by which it is conveyed into an air separator 25 (Figures 2 to 5).

At the top of the separator 25 there is provided an air vent valve 26 (Figures 5 and 6) which is meant to vent externally any bubbles or pockets of air that are present in the water flowing through the separator 25 under the effect of the suction applied by the pump. The water then passes through the opening 27 and is returned along the delivery 28 and the duct 28a to reheat in the primary exchanger.

The manifold 24 also receives the return stream that arrives from the radiators 30, which is allowed as an alternative to the stream of primary water that arrives from the exchanger 10, and since it too is forced to pass through the separator 25 it is subjected to venting before being drawn into the pump 22.

The water in the circuit of the primary exchanger, once heated, by virtue of the stalled position in which the three-way valve 19 lies when no sanitary water is being drawn, instead of being diverted due to the action of the pump 22 toward the water-water exchanger 10 is conveyed by means of an angled duct 29 into the unit 1 and the connecting duct 3 toward the nipple 8 for delivery to the radiators 30 and then returns through the connector 9 into the common manifold 24, and so forth.

The openings 31 in the unit 1 and 32, 33 and 34 of the unit 2 constitute a matching number of connectors for connection to quick couplings and corresponding retention means respectively for a capillary tube of a water gauge, for a drain cock, for a safety valve and for a pipe for connection to an expansion vessel, as usually occurs in the art.

A supply cock of the system can be controlled by means of a stem 35 which, by opening the cock, transfers, by means of an internal passage, sanitary water into the primary circuit to fill the entire system.

A screw-controlled pawl 36 acts as a regulator to set the maximum flow-rate of sanitary water. By acting on the pawl 36 it is possible to regulate the flow-rate of the sanitary water so as to obtain, at the user, the delivery of water at a chosen temperature.

The openings 38 and 39 in the unit 1 constitute couplings for connecting, respectively, a probe for controlling the temperature of the water in the primary circuit and a probe for the sanitary circuit.

As illustrated by way of example in Figure 4, each quick coupling comprises a seat 37a in the female part, which has a shoulder 37b for the abutment of the male part. Said male part has an annular slot 37c for accommodating a sealing gasket 37d. The slot 37c is preferably obtained by providing a corrugation in the male part, so as to delimit a rear shoulder 37e in the male part against which a clip or retainer 37f can abut; said clip can be inserted in (and extracted from, when necessary) a suitable hole provided in the female part.

In order to allow the impeller of the pump to rotate so as to perform an effective pumping action but maintain flow-rate and head at values which ensure optimum performance and with substantially silent operation, the scroll must have a small and gradual widening so as to guide the centrifuged water to the delivery duct 28 without producing cavitation or gurgling, which in addition to reducing the performance of the pump cause noise. This result has been achieved by providing a spiral curve inside the scroll with an angle of tangency between 5 and 30° of the delivery duct.

In order to separate the air bubbles in a water circulation circuit, it is customary to convey the flow into a separator container whose transverse cross-section is approximately ten times that of the feed duct, so that as a consequence of the reduction in the speed of the stream the bubbles have the time to rise toward the upper part of the separator, where an air vent valve 26 is provided, while the water flows out from the opposite side with respect to the inlet side.

According to the present invention, a cylindrical separator container 42 (Figure 5) is provided which is formed monolithically with the scroll 22 of the pump and which includes, directly below the air vent valve 26, an M-shaped grille 43 which acts as a trap for retaining the air bubbles, which are caught between the meshes of the grille and can then rise along the grille until they reach the vent valve 26 far external venting.

Advantageously, the degassing unit formed by the scroll 22 and by the separator 42 can constitute an independent unit meant to be coupled to the body or casing of a water pump (not shown). Said units are shown in Figures 1 and 2 and 4 to 6 and also in Figures 7 to 10, in which the feed duct 24 is coaxial to the internal opening 25 of the separator. The scroll 22 can be provided with a ring 22a (Figures 2 and 8) for coupling to the pump motor and for delimiting its geometric shape.

In this case too, the stream that arrives from the feed duct 24, before being affected by the suction of the impeller of the pump through the opening 27, must flow along the intake duct 25 in which the M-shaped grille 43 is accommodated. The grille 43 acts as a trap for retaining the air bubbles, which by being caught between the meshes of the grille form clusters, generating larger and larger bubbles which gradually rise toward the vent valve 26, from which the air is vented externally.

Depending on the type of plant that the pump must serve, the grille 43 can assume a different shape, for example an N-like or zigzag or sinusoidal one, and have different shapes and dimensions for the meshes, which can be quadrangular, rhomboidal or circular in a horizontal or vertical direction and can have a spacing of 2 to 7 mm in a longitudinal direction.

A specific configuration of the grille 43 is chosen as a function of the expected intensity of the stream and of the operating pressures of the systems, since these variables determine the number and diameter of the bubbles to be vented.

A degassing unit structured as described, besides allowing a drastic bulk reduction, ensures that the bubbles trapped in the water, instead of being simply slowed inside it in order to have the time to rise toward the vent valve 26, are retained and separated from the stream and are allowed to rise, caught in the grille 43, which is appropriately shaped and facilitates the clustering of several bubbles.

Tests have been conducted by injecting 400 cm³ of air into a system with air bubble-free water circulation at the pressure of one bar; the amounts of degassed air, i.e., of air discharged from the valve 26, were noted at regular time intervals. The results are shown in the following Table 1, which clearly shows that after 1 minute approximately 80% of the air had been vented.

**Table 1**

| PLANT FLOW-RATE: 1000 l/h | | | | | Q of fed air: 400 cm³ | | | |
|---|---|---|---|---|---|---|---|---|
| TEST 1 | Time | 30" | 1' | 2' | 3' | 5' | 10' | 20' |
| | cm³ of degassed air | 280 | 320 | 345 | 350 | 365 | 370 | |
| | Percentage | 70 | 80 | 86,2 | 87,5 | 91,2 | 92.5 | |
| TEST 2 | Time | 30" | 1' | 2' | 3' | 5' | 10' | 20' |
| | cm³ of degassed air | 240 | 315 | 345 | 355 | 365 | 370 | |
| | Percentage | 60 | 78,7 | 86,2 | 88,7 | 91,2 | 92,5 | |
| AVERAGE PERCENTAGE | | 65 | 79,3 | 86,2 | 88,1 | 91,2 | 92;5 | |

The results of Table 1 are plotted in the chart of Figure 11.

A WILO RS 20-65 (maximum speed 2400 rpm) was used for the tests, while a commercially available CALEFFI Robocal valve was used as a vent valve.

The above-described experimental results are very good and difficult to achieve with conventional systems, since the injected air concentrates mostly in one region of the system, so that the pump starts to cavitate and very often is unable to initiate or maintain water circulation.

The above-described invention is susceptible of numerous modifications and variations within the protective scope defined by the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A valve unit with built-in hydraulic distribution, particularly suitable for wall mounted boilers for heating and producing sanitary hot water comprising: a three-way valve unit (1), which can be connected to a water supply mains (18), to a user (17) of a secondary sanitary hot water circuit, and to an outlet (23) of a primary circuit for water heated by an main heat exchanger, a pump breather unit (2), which can be connected to an inlet (8) and to an outlet (9) of a set of radiators (30) of a heating system, and to an inlet (28) of said primary circuit; and a water-water heat exchanger (10) which is connected in parallel to said units (1, 2) so as to receive in countercurrent hot water from said primary circuit and cold water from said secondary circuit starting from said valve unit (1) in order to supply sanitary hot water to said user; a base plate (4) made of a rigid material arranged to support said valve unit (1) and said pump-breather unit (2) on a same side thereof, a plurality of metal connecting nipples (6, 7, 8, 9) each having a threaded tip portion extending through, and protruding from, the other side of said base plate (4), and **characterised in that** it comprises screw means (5) for securing said valve and pump breather units (1, 2) to said base plate (4), and a nipple portion (ES) whose perimeter is polygonal in shape, fitted into a respective seat formed in a portion of the valve and pump breather units (1,2) contacting a gasket means (5e) delimiting an interspace (5b) between said seat in said portion of the valve and pump breather units (1,2) contacting a gasket means (5a) and said base plate (4), said interspace (5b) having a height that is slightly greater than said polygonally shaped portion of the nipples (ES).

2. A valve unit according to claim 1, **characterised in that** said valve unit (1) is in fluid communication with a pair of nipples (8, 7) for connection to a sanitary water distribution system and said pump-breather unit (2) has a pair of nipples (8, 9) for fluid communication with a set of radiators (30).

3. A valve unit according to claim 1, **characterised in that** each nipple (6-9) is fitted to be articulated about a respective gasket means (5a) in an enlarged portion (5c) of plastics material, thereby allowing adjustments during coupling to prevent tensioning stresses from being transmitted to plastics portions of said respective unit (1,2) in fluid communication therewith.

4. A valve unit according to any preceding claim, **characterised in that** said water-water heat exchanger (10) is supported and fixed to said units (1,2) by means of a plurality of tension elements (11), each of which passes through a respective opening provided in one of said units and is screwable onto a respective pin (12) which is fixed to said exchanger (10) and partly inserted into a respective seat (44) formed in a respective unit (1, 2) for accommodating said tension element (11).

5. A valve unit according to any preceding claim, **characterised in that** said valve unit (1) comprises a flow control valve (24) for flow rate control.

6. A valve unit according to any preceding claim, **characterised in that** it comprises a system supplying cock arranged to be actuated by means of a stem (35) to transfer sanitary water into said primary circuit for filling the entire system.

7. A valve unit according to any preceding claim, **characterised in that** it comprises a screw-controlled pawl (36) acting as a maximum flow-rate regulator for sanitary water.

8. A valve unit according to any preceding claim, **characterised in that** it comprises a plurality of coupling ports (31, 32, 33, 34, 38, 39) respectively for a capillary tube of a water gauge, for a drain cock, a safety valve, a pipe connection to an expansion vessel, and a probe for controlling said temperature of the water in said primary circuit and for a probe for said sanitary circuit.

9. A valve unit according to any preceding claim, **characterised in that** it comprises a plurality of quick couplings, each comprising a female, and a male portion, each quick coupling comprising a seat (37a) formed in said female portion and having an abutment shoulder for said male portion, said male portion being formed with an annular external groove (37c) designed to accommodate a sealing gasket (37d).

10. A valve unit according to claim 9, **characterised in that** said annular external groove (37c) comprises a corrugated male portion to delimit a rear shoulder (37e) in said male portion, a clip or retainer (37f) arranged to abut against said rear shoulder (37e) and to be insertable into, and removable from, a suitable hole provided in said female portion.

11. A valve unit according to any preceding claim, **characterised in that** said pump-breather unit (2) comprises a separator container (42) which is integral with a pump scroll (22).

12. A valve unit according to claim 11, **characterised in that** said separator container (42) comprises, at the top thereof, an air vent valve (26) and locates a grille with a plurality of layers (43) to trap air bubbles present in the water drawn by the pump.

13. A valve unit according to claim 11 or 12 **characterised in that** said separator container (42) is directly connected to, and fed by, one manifold (24) collecting the return stream from both said heating system (30) and said water to water exchanger (10).

## Patentansprüche

1. Ventileinheit, mit einer integrierten hydraulischen Verteilung, insbesondere geeignet für wandbefestigte Boiler zum Heizen und Erzeugen von sanitärem Warmwasser, mit: einer Dreiwege-Ventileinheit (1), die mit einem Wasserzuführrohrnetz (7.8), mit einem Verbraucher (17) eines sekundären sanitären Warmwasser-Kreislaufs, und mit einem Auslass (23) eines Primärkreislaufs für Wasser, das mittels eines Hauptwärmeaustauschers aufgeheizt wird, verbunden werden kann; einer Pumpenentlüftungseinheit (2), die mit einem Einlass (8) und einem Auslass (9) einer Gruppe von Radiatoren (30) eines Heizsystems und mit einem Einlass (28) des Primärkreislaufs verbunden werden kann; und einem Wasser-Wasser-Wärmeaustauscher (10), der parallel mit den Einheiten (1, 2) verbunden ist, um im Gegenstrom Warmwasser aus dem Primärkreislauf und Kaltwasser aus dem Sekundärkreislauf aufzunehmen, der von der Ventileinheit (1) ausgeht, um dem Verbraucher sanitäres Warmwasser zuzuführen; einer Grundplatte (4), die aus einem steifen Material gefertigt ist, die dazu ausgelegt ist, die Ventileinheit (1) und die Pumpenentlüftungseinheit (2) auf einer gleichen Seite derelben zu tragen, wobei sich eine Vielzahl von Metallverbindungsrohrstutzen (6, 7, 8, 9), von denen jeder einen Endabschnitt mit Gewinde aufweist, durch die andere Seite der Grundplatte (4) erstreckt und aus ihr herausragt, **dadurch gekennzeichnet, dass** sie Schraubmittel (5) zum Befestigen der Ventil- und Pumpenentlüftungseinheiten (1, 2) an der Grundplatte (4) und einen Rohrstutzenabschnitt (ES) aufweist, dessen Umfang von mehreckiger Gestalt ist, der in eine entsprechende Aufnahme eingepasst ist, die in einem Abschnitt der Ventil- und Pumpenentlüftungseinheiten (1, 2) ausgebildet ist, der mit einem Dichtmittel (5a) in Berührung steht, das einen Zwischenraum (5b) zwischen der Aufnahme in dem Abschnitt der Ventil- und Pumpenentlüftungseinheiten (1, 2), der mit einem Dichtmittel (5a) in Berührung steht, und der Grundplatte (4) begrenzt, wobei der Zwischenraum (5b) eine Höhe aufweist, die geringfügig größer als der mehreckig geformte Abschnitt der Rohrstutzen (ES) ist.

2. Ventileinheit nach Anspruch 1, **dadurch gekennzeichnet, dass** die Ventileinheit (1) in Flüssigkeitskommunikation mit einem Paar von Rohrstutzen (6, 7) zur Verbindung mit einem sanitären wasserverteilungssystem steht, und dass die Pumpenentlüftungseinheit (2) ein Paar von Rohrstutzen (8, 9) zur Flüssigkeitskommunikation mit einer Gruppe von Radiatoren (30) aufweist.

3. Ventileinheit nach Anspruch 1, **dadurch gekennzeichnet, dass** jeder Rohrstutzen (6-9) derart eingepasst ist, dass er um ein entsprechendes Dichtmittel (5a) herum in einem vergrößertem Abschnitt (5c) aus Kunststoff angelenkt ist, wodurch Justagen während des Ankoppeln erlaubt werden, um zu verhindern, dass Spannungsbeanspruchungen auf Kunststoffabschnitte der entsprechenden Einheit (1, 2), die damit in Flüssigkeitskommunikation stehen, übertragen werden.

4. Ventileinheit nach einem der vorhergehenden Ansprüche, **dadurch gekennzeichnet, dass** der Wasser-Wasser-Wärmeaustauscher (10) mittels einer Vielzahl von Spannelementen (11) gehalten und an den Einheiten (1, 2) befestigt ist, von denen jedes durch eine entsprechende Öffnung hindurchgeht, die in einer der Einheiten vorgesehen ist und auf einen entsprechenden Zapfen (12) schraubbar ist, der an dem Austauscher (10) befestigt und teilweise in eine entsprechende Aufnahme (44) eingesetzt ist, die in einer entsprechenden Einheit (1, 2) zum Aufnehmen des Spannelements (11) gebildet ist.

5. Ventileinheit nach einem der vorhergehenden Ansprüche, **dadurch gekennzeichnet, dass** die Ventileinheit (1) ein Flusssteuerventil (24) zur Steuerung der Flussrate aufweist.

6. Ventileinheit nach einem der vorhergehenden Ansprüche, **dadurch gekennzeichnet, dass** sie einen Systemzufuhrhahn aufweist, der dazu ausgelegt ist, mittels eines Hebels (35) betätigt zu werden, um sanitäres Wasser in den Primärkreislauf zum Füllen des gesamten Systems zu überführen.

7. Ventileinheit nach einem der vorhergehenden Ansprüche, **dadurch gekennzeichnet, dass** sie eine schraubgesteuerte Sperrklinke (36) aufweist, die als ein Regler für die maximale Flussrate von sanitärem Wasser wirkt.

8. Ventileinheit nach einem der vorhergehenden Ansprüche, **dadurch gekennzeichnet, dass** sie eine Vielzahl von Verbindungsanschlüssen (31, 32, 33, 34, 38, 39) jeweils für ein Kapillarrohr einer Wasseranzeige, für einen Abflusshahn, für ein Sicherheitsventil, für eine Rohrverbindung an ein Ausdehnungsgefäß und für eine Sonde zum Kontrollieren der Temperatur des Wassers in dem Primärkreislauf und für eine Sonde für den sanitären Kreislauf aufweist.

9. Ventileinheit nach einem der vorhergehenden Ansprüche, **dadurch gekennzeichnet, dass** sie eine Vielzahl von Schnellkupplungen aufweist, wobei jede einen weiblichen und einen männlichen Abschnitt aufweist, wobei jede Schnellkupplung eine Aufnahme (37a) aufweist, die in dem weiblichen Abschnitt gebildet ist und eine Anlageschulter für den männlichen Abschnitt aufweist, wobei der männliche Abschnitt mit einer ringförmigen äußeren Nut (37c) gebildet ist, die dazu ausgestaltet ist, eine Dichtung (37d) aufzunehmen.

10. Ventileinheit nach Anspruch 9, **dadurch gekennzeichnet, dass** die ringförmige äußere Nut (37c) einen geriffelten männlichen Abschnitt, um eine hintere Schulter (37e) in dem männlichen Abschnitt zu begrenzen, eine Spange oder eine Halterung (37f) aufweist, die derart angeordnet ist, dass sie gegen die hintere Schulter (37e) anliegt und in eine geeignete Öffnung, die in dem weiblichen Abschnitt vorgesehen ist, einführbar und aus ihr entfernbar ist.

11. Ventileinheit nach einem der vorhergehenden Ansprüche, **dadurch gekennzeichnet, dass** die Pumpenentlüftungseinheit (2) einen Trennbehälter (42) aufweist, der integral mit einem Pumpen-Antriebsflansch (22) ausgebildet ist.

12. Ventileinheit nach Anspruch 11, **dadurch gekennzeichnet, dass** der Trennbehälter (42) an seiner Oberseite ein Entlüftungsventil (26) aufweist und ein Gitter mit einer Vielzahl von Schichten (43) enthält, um Luftblasen einzufangen, die in dem Wasser vorhanden sind, das durch die Pumpe angesaugt worden ist.

13. Ventileinheit nach Anspruch 11 oder 12, **dadurch gekennzeichnet, dass** der Trennbehälter (42) direkt mit einem Verteiler (24) verbunden ist und durch ihn gespeist wird, der den Rückstrom aus sowohl dem Heizsystem (30) als auch dem Wasser-zu-wasser-Austauscher (10) sammelt.

## Revendications

1. Une unité de soupape avec système de distribution hydraulique intégré, particulièrement destiné à des chaudières murales pour le chauffage et la production d'eau chaude sanitaire comprenant : un distributeur à trois voies (1) apte à être raccordé à un réseau d'alimentation en eau (18), à un utilisateur (17) d'un circuit secondaire d'eau chaude sanitaire et à une sortie (23) d'un circuit primaire pour de l'eau chauffée par un échangeur de chaleur principal ; une unité de reniflard de pompe (2) apte à être raccordée à une admission (8) et à une sortie (9) d'un ensemble de radiateurs (30) d'un système de chauffage, et à une admission (28) dudit circuit primaire ; et un échangeur de chaleur eau-eau (10) raccordé en parallèle auxdites unités (1, 2) de manière à recevoir en contre-courant de l'eau chaude dudit circuit primaire et de l'eau froide dudit circuit secondaire à partir de ladite unité de soupape (1) afin d'alimenter de l'eau chaude sanitaire audit utilisateur ; une plaque de base (4) en matériau rigide disposée pour supporter ladite unité de valve (1) et ladite unité de reniflard de pompe (2) sur un même côté de ladite plaque de base, une pluralité de raccords métalliques (6, 7, 8, 9), chacun d'eux comportant une portion de pointe filetée s'étendant à travers, et faisant saillie de, l'autre côté de ladite plaque de base (4) et **caractérisée en ce qu'**elle comprend des moyens à vis (5) pour fixer lesdites unités de soupape et de reniflard de pompe (1, 2) à ladite plaque de base (4), et une portion de raccord fileté (ES) dont le périmètre est de forme polygonale, ajustée dans un logement respectif formé dans une portion des unités de soupape et de reniflard de pompe (1, 2) en contact avec un moyen de joint d'étanchéité (5a), délimitant un espace intermédiaire (5b) entre ledit logement dans ladite portion des unités de soupape et de reniflard de pompe (1, 2) en contact avec un moyen de joint d'étanchéité (6a) et ladite plaque de base (4), ledit espace intermédiaire (5b) ayant une hauteur légèrement supérieure à la portion de forme polygonale des raccords filetés (ES).

2. Une unité de soupape selon la revendication 1, **caractérisée en ce que** ladite unité de valve (1) est en communication hydraulique avec une paire de raccords filetés (6, 7) pour raccordement à un système de distribution d'eau sanitaire, et **en ce que** ladite unité de reniflard de pompe (2) comporte une paire de raccords filetés (8, 9) pour communication hydraulique avec un ensemble de radiateurs (30).

3. Une unité de soupape selon la revendication 1, **caractérisée en ce que** chaque raccord fileté (6-9) est monté pour être articulé autour d'un moyen de joint d'étanchéité respectif (5a) dans une portion élargie (5c) en matière plastique, permettant ainsi des réglages pendant l'accouplement pour empêcher la transmission d'efforts de traction aux portions en plastique de ladite unité respective (1, 2) en communication hydraulique avec celles-ci.

4. Une unité de soupape selon l'une quelconque des revendications précédentes, **caractérisée en ce que** ledit échangeur de chaleur eau-eau (10) est supporté et fixé auxdites unités (1, 2) au moyen d'une pluralité d'éléments de tension (11), chacun d'eux passant à travers un orifice respectif prévu dans l'une desdites unités et pouvant être vissé sur un axe (12) respectif fixé sur ledit échangeur (10) et partiellement inséré dans un logement (44) respectif formé dans une unité respective (1, 2) pour recevoir ledit élément de tension (11).

5. Une unité de soupape selon l'une quelconque des revendications précédentes, **caractérisée en ce que** ladite unité de soupape (1) comprend une vanne (24) de régulation du débit pour réguler le débit.

6. Une unité de soupape selon l'une quelconque des revendications précédentes, **caractérisée en ce qu'**elle comprend un robinet d'alimentation du système disposé pour être actionné au moyen d'une tige (35) pour transférer l'eau sanitaire dans ledit circuit primaire pour remplir l'ensemble du système.

7. Une unité de soupape selon l'une quelconque des revendications précédentes, **caractérisée en ce qu'**elle comprend un cliquet (36) commandé par vis faisant fonction de régulateur de débit maximum pour l'eau sanitaire.

8. Une unité de soupape selon l'une quelconque des revendications précédentes, **caractérisée en ce qu'**elle comprend une pluralité d'orifices d'accouplement (31, 32, 33, 34, 38, 39) respectivement pour un tube capillaire d'un indicateur de niveau d'eau, pour un robinet de vidange, un tuyau de raccordement à un réservoir de détente et une sonde pour contrôler ladite température de l'eau dans ledit circuit primaire, et pour une sonde pour ledit circuit primaire.

9. Une unité de soupape selon l'une quelconque des revendications précédentes, **caractérisée en ce qu'**elle comporte une pluralité de raccords rapides, chacun comprenant une partie mâle et une partie femelle, chaque raccord rapide comprenant un logement (37a) formé dans ladite partie femelle et comportant un épaulement formant butée pour ladite partie mâle, ladite partie mâle étant formée avec une rainure extérieure annulaire (37c) conçue pour loger un joint d'étanchéité (37d).

10. Une unité de soupape selon la revendication 9, **caractérisée en ce que** ladite rainure extérieure annulaire (37c) comprend une partie mâle cannelée pour délimiter un épaulement arrière (37e) dans ladite partie mâle, une patte d'attache ou pièce de retenue (37f) disposée pour buter contre ledit épaulement arrière (37e) et être insérable dans, et apte à être extraite d'un orifice approprié prévu dans ladite partie femelle.

11. Une unité de soupape selon l'une quelconque des revendications précédentes, **caractérisée en ce que** ladite unité de reniflard de pompe (2) comprend un conteneur séparateur (42) qui est solidaire d'une spirale de pompe (22).

12. Une unité de soupape selon la revendication 11, **caractérisée en ce que** ledit conteneur séparateur (42) comprend, à sa partie supérieure, une soupape de purge d'air (26) et loge une grille munie d'une pluralité de couches (43) pour retenir les bulles d'air présentes dans l'eau soutirée par la pompe.

13. Une unité de soupape selon la revendication 11 ou 12, **caractérisée en ce que** ledit conteneur séparateur (42) est directement raccordé à, et alimenté par, un collecteur d'admission (24) collectant le flux de retour à la fois dudit système de chauffage (30) et dudit échangeur eau-eau (10).
